# EUROPEAN PATENT APPLICATION

(11) **EP 3 261 349 A1**
(43) Date of publication of application: **27.12.2017**
(21) Application number: 16752686.2
(22) Date of filing: 17.02.2016
(51) Int. Cl.: H04N 19/96, H04N 19/17, H04N 19/12

(54) **METHOD AND DEVICE FOR ENCODING/DECODING VIDEO SIGNAL BY USING ADAPTIVE SCAN ORDER**

(30) Priority: 17.02.2015 US 201562116953 P
(71) Applicant: LG Electronics Inc., Yeongdeungpo-gu Seoul 07336 (KR)
(72) Inventor: JEON, Yongjoon, Seoul 06772 (KR); HEO, Jin, Seoul 06772 (KR); YOO, Sunmi, Seoul 06772 (KR)
(74) Representative: Frenkel, Matthias Alexander
(86) International application number: PCT/KR2016/001589
(87) International publication number: WO 2016/133356

(57) **Abstract**

The present invention provides a method for decoding a video signal including extracting an intra prediction mode of a current block from the video signal; generating a prediction block based on scan order information corresponding to the intra prediction mode; and reconstructing the current block by using the generated prediction block and a residual block, and the scan order information is determined based on a direction of the intra prediction mode.

## Description

### [Technical Field]

The present invention relates to encoding/decoding method of a video signal, and more particularly, to a technique of performing more accurate prediction by applying an adaptive scan order according to a prediction mode.

### [Background Art]

Compression encoding means a series of signal processing technology for transmitting digitalized information through a communication line or for storing digitalized information in a form appropriate to a storage medium. Media such video, an image, and a voice may be a target of compression encoding, particularly, technology that performs compression encoding using video as a target is referred to as video compression.

Next generation video contents will have a characteristic of a high spatial resolution, a high frame rate, and high dimensionality of scene representation. In order to process such contents, memory storage, memory access rate, and processing power technologies will remarkably increase.

Therefore, it is necessary to design a coding tool for more efficiently processing next generation video contents.

### [Disclosure]

### [Technical Problem]

An object of the present disclosure is to propose a method for applying a scan order adaptively according to a prediction mode when performing an intra prediction.

An object of the present disclosure is to propose a method for determining a Transform Unit (TU) scan order in a Prediction Unit (PU).

An object of the present disclosure is to propose a method for determining a reference sample available according to a prediction mode when performing an intra prediction.

An object of the present disclosure is to propose a method for performing a more efficient prediction using a reference sample determined according to a prediction mode.

An object of the present disclosure is to propose a method for signaling information representing a scan order of Transform Unit (TU) in a Prediction Unit (PU).

### [Technical Solution]

An embodiment of the present invention proposes a method for designing a coding tool for a high efficiency compression.

In addition, an embodiment of the present invention proposes a more efficient prediction method during a prediction procedure.

In addition, an embodiment of the present invention proposes a method for changing a scan order of Transform Unit (TU) in a Prediction Unit (PU).

In addition, an embodiment of the present invention proposes a method for applying a scan order adaptively according to a prediction mode when performing an intra prediction.

In addition, an embodiment of the present invention proposes a method for determining a reference sample available according to a prediction mode when performing an intra prediction.

In addition, an embodiment of the present invention proposes a method for performing a more efficient prediction using a reference sample determined according to a prediction mode.

In addition, an embodiment of the present invention proposes a method for signaling information representing a scan order of Transform Unit (TU) in a Prediction Unit (PU).

### [Technical Effects]

According to the present invention, when performing an intra prediction, a scan order is adaptively applied according to a prediction mode, and accordingly, more number of reference samples available may be secured, and a reference sample which is appropriate to the prediction mode may be obtained.

In addition, more number of reference samples available may be secured, and a reference sample which is appropriate to the prediction mode may be obtained as such, and accordingly, a prediction performance may be improved.

In addition, the present invention provides a method for determining a Transform Unit (TU) scan order in a Prediction Unit (PU), and accordingly, a prediction performance may be improved, and further, a coding efficiency may be improved.

In addition, by providing a method for signaling information representing a scan order of Transform Unit (TU) in a Prediction Unit (PU), a coding efficiency may be improved.

### [Description of Drawings]

FIG. 1 is a block diagram illustrating a configuration of an encoder for encoding a video signal according to an embodiment of the present invention.
FIG. 2 is a block diagram illustrating a configuration of a decoder for decoding a video signal according to an embodiment of the present invention.
FIG. 3 is a diagram illustrating a division structure of a coding unit according to an embodiment of the present invention.
FIG. 4 is an embodiment to which the present invention is applied and is a diagram for illustrating a prediction unit.
FIGS. 5 and 6 are embodiments to which the present invention is applied, wherein FIG. 5 is a diagram for illustrating an intra-prediction method and FIG. 6 is a diagram for illustrating a prediction direction according to an intra-prediction mode.
FIG. 7 is a diagram for describing a prediction procedure for a Transform Unit (TU) depth 1 in a vertical mode of an intra prediction as an embodiment to which the present invention is applied.
FIG. 8 is a diagram for describing a prediction procedure according to a raster scan with respect to TU depth 1 in a direction mode of the intra prediction as an embodiment to which the present invention is applied.
FIG. 9 is a diagram for describing a prediction procedure according to a vertical scan with respect to TU depth 1 in a direction mode of the intra prediction as an embodiment to which the present invention is applied.
FIGS. 10 and 11 illustrate a prediction procedure according to the raster scan for describing necessity of the vertical scan with respect to TU depth 2 in a direction mode of the intra prediction, as embodiments to which the present invention is applied.
FIGS. 12 and 13 illustrate a prediction procedure according to the raster scan for describing necessity of the horizontal scan with respect to TU depth 2 in a direction mode of the intra prediction, as embodiments to which the present invention is applied.
FIGS. 14 to 17 are diagrams for describing a TU decoding order according to a TU decoding order variable, as embodiments to which the present invention is applied.
FIG. 18 is syntax for signaling a scan order flag for the intra prediction, as an embodiment to which the present invention is applied.
FIG. 19 is a flowchart for describing a procedure of performing a prediction using the scan order corresponding to the intra prediction mode, as an embodiment to which the present invention is applied.
FIG. 20 is a flowchart for a procedure of performing the intra prediction based on a flag representing whether to transmit scan order information for the intra prediction, as an embodiment to which the present invention is applied.

### [Best Mode for Invention]

The present invention provides a method for decoding a video signal including extracting an intra prediction mode of a current block from the video signal; generating a prediction block based on scan order information corresponding to the intra prediction mode; and reconstructing the current block by using the generated prediction block and a residual block, and the scan order information is determined based on a direction of the intra prediction mode.

In the present invention, the scan order information is a variable derived according to the intra prediction mode.

In the present invention, the scan order information includes at least one of a raster scan, a vertical scan, a horizontal scan or a zigzag scan.

In the present invention, the method further includes obtaining the scan order information from the video signal, and the scan order information is obtained for each prediction unit.

In the present invention, the method further includes obtaining a flag representing whether to transmit the scan order information for an intra prediction, and the scan order information is obtained when the flag indicates a transmission of the scan order information for the intra prediction.

In the present invention, the flag is defined in at least one level of an Sequence Parameter Set (SPS), a Picture Parameter Set (PPS) or a slice header.

In the present invention, the scan order information corresponds to a raster scan when the intra prediction mode is less than 2, the scan order information corresponds to a horizontal scan when the intra prediction mode is 2 or more and less than 18, and the scan order information corresponds to a vertical scan when the intra prediction mode is 18 or more corresponds to the vertical scan.

The present invention provides an apparatus for decoding a video signal including a bitstream extracting unit configured to extract an intra prediction mode of a current block from the video signal; an intra prediction unit configured to generate a prediction block based on scan order information corresponding to the intra prediction mode; and a reconstruction unit configured to reconstruct the current block by using the generated prediction block and a residual block, and the scan order information is determined based on a direction of the intra prediction mode.

In the present invention, the bitstream extracting unit extracts the scan order information from the video signal, and the scan order information is obtained for each prediction unit.

In the present invention, the bitstream extracting unit extracts a flag representing whether to transmit the scan order information for an intra prediction, and the scan order information is obtained when the flag indicates a transmission of the scan order information for the intra prediction.

### [Mode for Invention]

Hereinafter, a configuration and operation of an embodiment of the present invention will be described in detail with reference to the accompanying drawings, a configuration and operation of the present invention described with reference to the drawings are described as an embodiment, and the scope, a core configuration, and operation of the present invention are not limited thereto.

Further, terms used in the present invention are selected from currently widely used general terms, but in a specific case, randomly selected terms by an applicant are used. In such a case, in a detailed description of a corresponding portion, because a meaning thereof is clearly described, the terms should not be simply construed with only a name of terms used in a description of the present invention and a meaning of the corresponding term should be comprehended and construed.

Further, when there is a general term selected for describing the invention or another term having a similar meaning, terms used in the present invention may be replaced for more appropriate interpretation. For example, in each coding process, a signal, data, a sample, a picture, a frame, and a block may be appropriately replaced and construed. Further, in each coding process, partitioning, decomposition, splitting, and division may be appropriately replaced and construed.

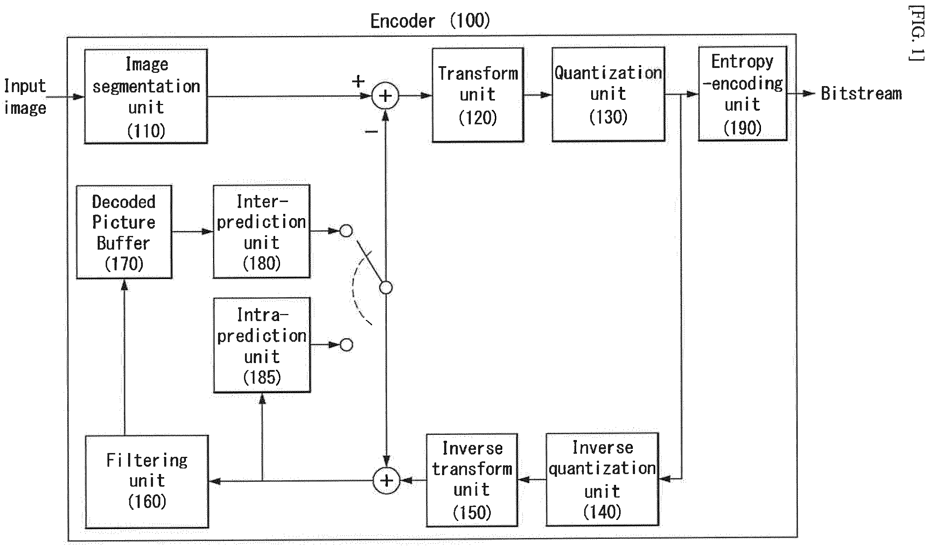

FIG. 1 shows a schematic block diagram of an encoder for encoding a video signal, in accordance with one embodiment of the present invention.

Referring to FIG. 1, an encoder 100 may include an image segmentation unit 110, a transform unit 120, a quantization unit 130, an inverse quantization unit 140, an inverse transform unit 150, a filtering unit 160, a DPB (Decoded Picture Buffer) 170, an inter-prediction unit 180, an intra-prediction unit 185 and an entropy-encoding unit 190.

The image segmentation unit 110 may divide an input image (or, a picture, a frame) input to the encoder 100 into one or more process units. For example, the process unit may be a coding tree unit (CTU), a coding unit (CU), a prediction unit (PU), or a transform unit (TU).

However, the terms are used only for convenience of illustration of the present disclosure, the present invention is not limited to the definitions of the terms. In this specification, for convenience of illustration, the term "coding unit" is employed as a unit used in a process of encoding or decoding a video signal, however, the present invention is not limited thereto, another process unit may be appropriately selected based on contents of the present disclosure.

The encoder 100 may generate a residual signal by subtracting a prediction signal output from the inter-prediction unit 180 or intra prediction unit 185 from the input image signal. The generated residual signal may be transmitted to the transform unit 120.

The transform unit 120 may apply a transform technique to the residual signal to produce a transform coefficient. The transform process may be applied to a pixel block having the same size of a square, or to a block of a variable size other than a square.

The quantization unit 130 may quantize the transform coefficient and transmits the quantized coefficient to the entropy-encoding unit 190. The entropy-encoding unit 190 may entropy-code the quantized signal and then output the entropy-coded signal as bitstreams.

The quantized signal output from the quantization unit 130 may be used to generate a prediction signal. For example, the quantized signal may be subjected to an inverse quantization and an inverse transform via the inverse quantization unit 140 and the inverse transform unit 150 in the loop respectively to reconstruct a residual signal. The reconstructed residual signal may be added to the prediction signal output from the inter-prediction unit 180 or intra-prediction unit 185 to generate a reconstructed signal.

On the other hand, in the compression process, adjacent blocks may be quantized by different quantization parameters, so that deterioration of the block boundary may occur. This phenomenon is called blocking artifacts. This is one of important factors for evaluating image quality. A filtering process may be performed to reduce such deterioration. Using the filtering process, the blocking deterioration may be eliminated, and, at the same time, an error of a current picture may be reduced, thereby improving the image quality.

The filtering unit 160 may apply filtering to the reconstructed signal and then outputs the filtered reconstructed signal to a reproducing device or the decoded picture buffer 170. The filtered signal transmitted to the decoded picture buffer 170 may be used as a reference picture in the inter-prediction unit 180. In this way, using the filtered picture as the reference picture in the inter-picture prediction mode, not only the picture quality but also the coding efficiency may be improved.

The decoded picture buffer 170 may store the filtered picture for use as the reference picture in the inter-prediction unit 180.

The inter-prediction unit 180 may perform temporal prediction and/or spatial prediction with reference to the reconstructed picture to remove temporal redundancy and/or spatial redundancy. In this case, the reference picture used for the prediction may be a transformed signal obtained via the quantization and inverse quantization on a block basis in the previous encoding/decoding. Thus, this may result in blocking artifacts or ringing artifacts.

Accordingly, in order to solve the performance degradation due to the discontinuity or quantization of the signal, the inter-prediction unit 180 may interpolate signals between pixels on a subpixel basis using a low-pass filter. In this case, the subpixel may mean a virtual pixel generated by applying an interpolation filter. An integer pixel means an actual pixel existing in the reconstructed picture. The interpolation method may include linear interpolation, bi-linear interpolation and Wiener filter, etc.

The interpolation filter may be applied to the reconstructed picture to improve the accuracy of the prediction. For example, the inter-prediction unit 180 may apply the interpolation filter to integer pixels to generate interpolated pixels. The inter-prediction unit 180 may perform prediction using an interpolated block composed of the interpolated pixels as a prediction block.

The intra-prediction unit 185 may predict a current block by referring to samples in the vicinity of a block to be encoded currently.

The intra-prediction unit 185 may perform a following procedure to perform intra prediction. First, the intra-prediction unit 185 may prepare reference samples needed to generate a prediction signal. Then, the intra-prediction unit 185 may generate the prediction signal using the prepared reference samples. Thereafter, the intra-prediction unit 185 may encode a prediction mode. At this time, reference samples may be prepared through reference sample padding and/or reference sample filtering. Since the reference samples have undergone the prediction and reconstruction process, a quantization error may exist. Therefore, in order to reduce such errors, a reference sample filtering process may be performed for each prediction mode used for intra-prediction.

The intra prediction unit 185 may select a prediction mode in a unit of PU in order to perform an intra prediction, and may perform a prediction in a unit of TU with respect to the selected prediction mode. In addition, the prediction performance order (or scan order) in a unit of TU may follow a raster scan order. For example, in the case that a PU is partitioned into 4 TUs (or in the case that a TU depth is 1 or more), a prediction may be performed in an order; upper left block -> upper right block -> lower left block -> lower right block.

In the case that a prediction is performed according to the scan order as above, an available sample may be changed, in addition, a required reference sample may be changed according to a prediction mode.

Accordingly, the present invention is to propose a method for determining a scan order in which a prediction mode is considered. By determining the scan order considering the prediction mode, more reference samples available may be secured, and through it, a prediction performance may be improved.

The prediction signal generated via the inter-prediction unit 180 or the intra-prediction unit 185 may be used to generate the reconstructed signal or used to generate the residual signal.

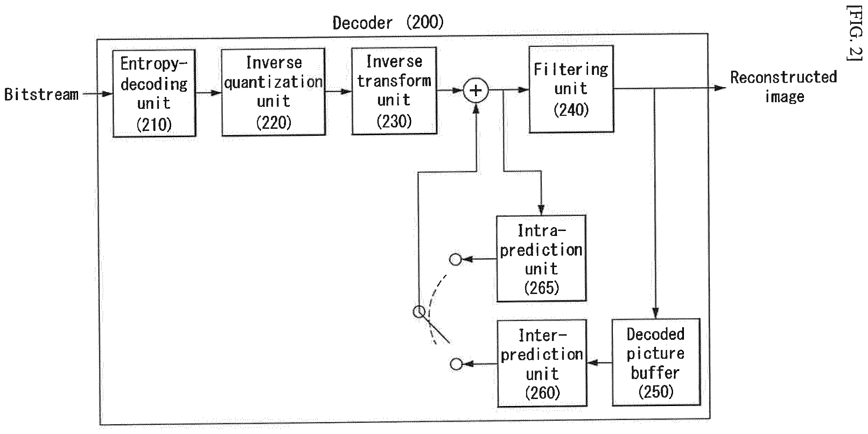

FIG. 2 shows a schematic block diagram of a decoder for decoding a video signal, in accordance with one embodiment of the present invention.

Referring to FIG. 2, a decoder 200 may include an entropy-decoding unit 210, an inverse quantization unit 220, an inverse transform unit 230, a filtering unit 240, a decoded picture buffer (DPB) 250, an inter-prediction unit 260 and an intra-prediction unit 265.

A reconstructed video signal output from the decoder 200 may be reproduced using a reproducing device.

The decoder 200 may receive the signal output from the encoder as shown in FIG. 1. The received signal may be entropy-decoded via the entropy-decoding unit 210.

The inverse quantization unit 220 may obtain a transform coefficient from the entropy-decoded signal using quantization step size information.

The inverse transform unit 230 may inverse-transform the transform coefficient to obtain a residual signal.

A reconstructed signal may be generated by adding the obtained residual signal to the prediction signal output from the inter-prediction unit 260 or the intra-prediction unit 265.

The filtering unit 240 may apply filtering to the reconstructed signal and may output the filtered reconstructed signal to the reproducing device or the decoded picture buffer unit 250. The filtered signal transmitted to the decoded picture buffer unit 250 may be used as a reference picture in the inter-prediction unit 260.

Herein, detailed descriptions for the filtering unit 160, the inter-prediction unit 180 and the intra-prediction unit 185 of the encoder 100 may be equally applied to the filtering unit 240, the inter-prediction unit 260 and the intra-prediction unit 265 of the decoder 200 respectively.

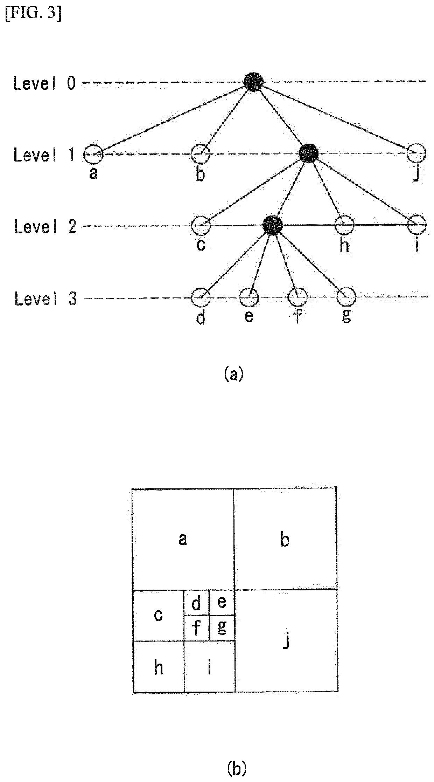

FIG. 3 is a diagram illustrating a division structure of a coding unit according to an embodiment of the present invention.

The encoder may split one video (or picture) in a coding tree unit (CTU) of a quadrangle form. The encoder sequentially encodes by one CTU in raster scan order.

For example, a size of the CTU may be determined to any one of 64x64, 32x32, and 16x16, but the present invention is not limited thereto. The encoder may select and use a size of the CTU according to a resolution of input image or a characteristic of input image. The CTU may include a coding tree block (CTB) of a luma component and a coding tree block (CTB) of two chroma components corresponding thereto.

One CTU may be decomposed in a quadtree (hereinafter, referred to as 'QT') structure. For example, one CTU may be split into four units in which a length of each side reduces in a half while having a square form. Decomposition of such a QT structure may be recursively performed.

Referring to FIG. 3, a root node of the QT may be related to the CTU. The QT may be split until arriving at a leaf node, and in this case, the leaf node may be referred to as a coding unit (CU).

The CU may mean a basic unit of a processing process of input image, for example, coding in which intra/inter prediction is performed. The CU may include a coding block (CB) of a luma component and a CB of two chroma components corresponding thereto. For example, a size of the CU may be determined to any one of 64x64, 32x32, 16x16, and 8x8, but the present invention is not limited thereto, and when video is high resolution video, a size of the CU may further increase or may be various sizes.

Referring to FIG. 3, the CTU corresponds to a root node and has a smallest depth (i.e., level 0) value. The CTU may not be split according to a characteristic of input image, and in this case, the CTU corresponds to a CU.

The CTU may be decomposed in a QT form and thus subordinate nodes having a depth of a level 1 may be generated. In a subordinate node having a depth of a level 1, a node (i.e., a leaf node) that is no longer split corresponds to the CU. For example, as shown in FIG. 3B, CU(a), CU(b), and CU(j) corresponding to nodes a, b, and j are split one time in the CTU and have a depth of a level 1.

At least one of nodes having a depth of a level 1 may be again split in a QT form. In a subordinate node having a depth of a level 2, a node (i.e., a leaf node) that is no longer split corresponds to a CU. For example, as shown in FIG. 3B, CU(c), CU(h), and CU(i) corresponding to nodes c, h, and I are split twice in the CTU and have a depth of a level 2.

Further, at least one of nodes having a depth of a level 2 may be again split in a QT form. In a subordinate node having a depth of a level 3, a node (i.e., a leaf node) that is no longer split corresponds to a CU. For example, as shown in FIG. 3B, CU(d), CU(e), CU(f), and CU(g) corresponding to d, e, f, and g are split three times in the CTU and have a depth of a level 3.

The encoder may determine a maximum size or a minimum size of the CU according to a characteristic (e.g., a resolution) of video or in consideration of encoding efficiency. Information thereof or information that can derive this may be included in bitstream. A CU having a maximum size may be referred to as a largest coding unit (LCU), and a CU having a minimum size may be referred to as a smallest coding unit (SCU).

Further, the CU having a tree structure may be hierarchically split with predetermined maximum depth information (or maximum level information). Each split CU may have depth information. Because depth information represents the split number and/or a level of the CU, the depth information may include information about a size of the CU.

Because the LCU is split in a QT form, when using a size of the LCU and maximum depth information, a size of the SCU may be obtained. Alternatively, in contrast, when using a size of the SCU and maximum depth information of a tree, a size of the LCU may be obtained.

For one CU, information representing whether a corresponding CU is split may be transferred to the decoder. For example, the information may be defined to a split flag and may be represented with "split_cu_flag". The split flag may be included in the entire CU, except for the SCU. For example, when a value of the split flag is '1', a corresponding CU is again split into four CUs, and when a value of the split flag is '0', a corresponding CU is no longer split and a coding process of the corresponding CU may be performed.

In an embodiment of FIG. 3, a split process of the CU is exemplified, but the above-described QT structure may be applied even to a split process of a transform unit (TU), which is a basic unit that performs transform.

The TU may be hierarchically split in a QT structure from a CU to code. For example, the CU may correspond to a root node of a tree of the transform unit (TU).

Because the TU is split in a QT structure, the TU split from the CU may be again split into a smaller subordinate TU. For example, a size of the TU may be determined to any one of 32x32, 16x16, 8x8, and 4x4, but the present invention is not limited thereto, and when the TU is high resolution video, a size of the TU may increase or may be various sizes.

For one TU, information representing whether a corresponding TU is split may be transferred to the decoder. For example, the information may be defined to a split transform flag and may be represented with a "split_transform_flag".

The split transform flag may be included in entire TUs, except for a TU of a minimum size. For example, when a value of the split transform flag is '1', a corresponding TU is again split into four TUs, and a value of the split transform flag is '0', a corresponding TU is no longer split.

As described above, the CU is a basic unit of coding that performs intra prediction or inter prediction. In order to more effectively code input image, the CU may be split into a prediction unit (PU).

A PU is a basic unit that generates a prediction block, and a prediction block may be differently generated in a PU unit even within one CU. The PU may be differently split according to whether an intra prediction mode is used or an inter prediction mode is used as a coding mode of the CU to which the PU belongs.

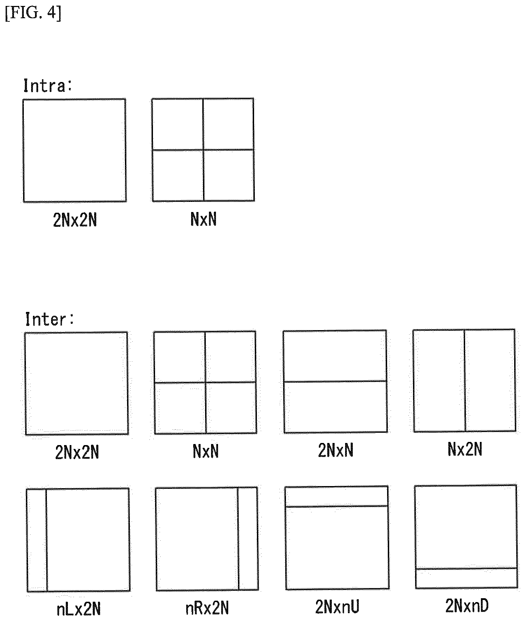

FIG. 4 is an embodiment to which the present invention is applied and is a diagram for illustrating a prediction unit.

A PU is differently partitioned depending on whether an intra-prediction mode or an inter-prediction mode is used as the coding mode of a CU to which the PU belongs.

FIG. 4(a) illustrates a PU in the case where the intra-prediction mode is used as the coding mode of a CU to which the PU belongs, and FIG. 4(b) illustrates a PU in the case where the inter-prediction mode is used as the coding mode of a CU to which the PU belongs.

Referring to FIG. 4(a), assuming the case where the size of one CU is 2Nx2N (N=4, 8, 16 or 32), one CU may be partitioned into two types (i.e., 2Nx2N and NxN).

In this case, if one CU is partitioned as a PU of the 2Nx2N form, this means that only one PU is present within one CU.

In contrast, if one CU is partitioned as a PU of the N×N form, one CU is partitioned into four PUs and a different prediction block for each PU is generated. In this case, the partition of the PU may be performed only if the size of a CB for the luma component of a CU is a minimum size (i.e., if the CU is an SCU).

Referring to FIG. 4(b), assuming that the size of one CU is 2Nx2N (N=4, 8, 16 or 32), one CU may be partitioned into eight PU types (i.e., 2Nx2N, NxN, 2NxN, Nx2N, nLx2N, nRx2N, 2NxnU and 2NxnD).

As in intra-prediction, the PU partition of the NxN form may be performed only if the size of a CB for the luma component of a CU is a minimum size (i.e., if the CU is an SCU).

In inter-prediction, the PU partition of the 2NxN form in which a PU is partitioned in a traverse direction and the PU partition of the Nx2N form in which a PU is partitioned in a longitudinal direction are supported.

Furthermore, the PU partition of nLx2N, nRx2N, 2NxnU and 2NxnD forms, that is, asymmetric motion partition (AMP) forms, are supported. In this case, 'n' means a 1/4 value of 2N. However, the AMP cannot be used if a CU to which a PU belongs is a CU of a minimum size.

In order to efficiently code an input image within one CTU, an optimum partition structure of a coding unit (CU), a prediction unit (PU) and a transform unit (TU) may be determined based on a minimum rate-distortion value through the following execution process. For example, an optimum CU partition process within a 64x64 CTU is described. A rate-distortion cost may be calculated through a partition process from a CU of a 64x64 size to a CU of an 8x8 size, and a detailed process thereof is as follows.
1) A partition structure of an optimum PU and TU which generates a minimum rate-distortion value is determined by performing inter/intra-prediction, transform/quantization and inverse quantization/inverse transform and entropy encoding on a CU of a 64x64 size.
2) The 64x64 CU is partitioned into four CUs of a 32x32 size, and an optimum partition structure of a PU and a TU which generates a minimum rate-distortion value for each of the 32x32 CUs is determined.
3) The 32x32 CU is partitioned into four CUs of a 16x16 size again, and an optimum partition structure of a PU and a TU which generates a minimum rate-distortion value for each of the 16x16 CUs is determined.
4) The 16x16 CU is partitioned into four CUs of an 8x8 size again, and an optimum partition structure of a PU and a TU which generates a minimum rate-distortion value for each of the 8x8 CUs is determined.
5) An optimum partition structure of a CU within a 16x16 block is determined by comparing the rate-distortion value of a 16x16 CU calculated in the process 3) with the sum of the rate-distortion values of the four 8x8 CUs calculated in the process 4). This process is performed on the remaining three 16x16 CUs in the same manner.
6) An optimum partition structure of a CU within a 32x32 block is determined by comparing the rate-distortion value of a 32x32 CU calculated in the process 2) with the sum of the rate-distortion values of the four 16x16 CUs calculated in the process 5). This process is performed on the remaining three 32x32 CUs in the same manner.
7) Finally, an optimum partition structure of a CU within a 64x64 block is determined by comparing the rate-distortion value of the 64x64 CU calculated in the process 1) with the sum of the rate-distortion values of the four 32x32 CUs obtained in the process 6).

In the intra-prediction mode, a prediction mode is selected in a PU unit and prediction and a reconfiguration are performed in an actual TU unit with respect to the selected prediction mode.

The TU means a basic unit by which actual prediction and a reconfiguration are performed. The TU includes a transform block (TB) for a luma component and a TB for two chroma components corresponding to the TB for a luma component.

In the example of FIG. 3, as in the case where one CTU is partitioned as a quadtree structure to generate a CU, a TU is hierarchically partitioned as a quadtree structure from one CU to be coded.

The TU is partitioned as a quadtree structure, and thus a TU partitioned from a CU may be partitioned into smaller lower TUs. In HEVC, the size of the TU may be determined to be any one of 32×32, 16×16, 8×8 and 4×4.

Referring back to FIG. 3, it is assumed that the root node of a quadtree is related to a CU. The quadtree is partitioned until a leaf node is reached, and the leaf node corresponds to a TU.

More specifically, a CU corresponds to a root node and has the smallest depth (i.e., depth=0) value. The CU may not be partitioned depending on the characteristics of an input image. In this case, a CU corresponds to a TU.

The CU may be partitioned in a quadtree form. As a result, lower nodes of a depth 1 (depth=1) are generated. Furthermore, a node (i.e., leaf node) that belongs to the lower nodes having the depth of 1 and that is no longer partitioned corresponds to a TU. For example, in FIG. 3(b), a TU(a), a TU(b) and a TU(j) corresponding to nodes a, b and j, respectively, have been once partitioned from the CU, and have the depth of 1.

At least any one of the nodes having the depth of 1 may be partitioned in a quadtree form again. As a result, lower nodes having a depth 2 (i.e., depth=2) are generated. Furthermore, a node (i.e., leaf node) that belongs to the lower nodes having the depth of 2 and that is no longer partitioned corresponds to a TU. For example, in FIG. 3(b), a TU(c), a TU(h) and a TU(i) corresponding to nodes c, h and i, respectively, have been twice partitioned from the CU, and have the depth of 2.

Furthermore, at least any one of the nodes having the depth of 2 may be partitioned in a quadtree form again. As a result, lower nodes having a depth 3 (i.e., depth=3) are generated. Furthermore, a node (i.e., leaf node) that belongs to the lower nodes having the depth of 3 and that is no longer partitioned corresponds to a CU. For example, in FIG. 3(b), a TU(d), a TU(e), a TU(f) and a TU(g) corresponding to nodes d, e, f and g, respectively, have been partitioned three times from the CU, and have the depth of 3.

A TU having a tree structure has predetermined maximum depth information (or the greatest level information) and may be hierarchically partitioned. Furthermore, each partitioned TU may have depth information. The depth information may include information about the size of the TU because it indicates the partitioned number and/or degree of the TU.

Regarding one TU, information (e.g., a partition TU flag "split_transform_flag") indicating whether a corresponding TU is partitioned may be transferred to the decoder. The partition information is included in all of TUs other than a TU of a minimum size. For example, if a value of the flag indicating whether a corresponding TU is partitioned is "1", the corresponding TU is partitioned into four TUs again. If a value of the flag indicating whether a corresponding TU is partitioned is "0", the corresponding TU is no longer partitioned.

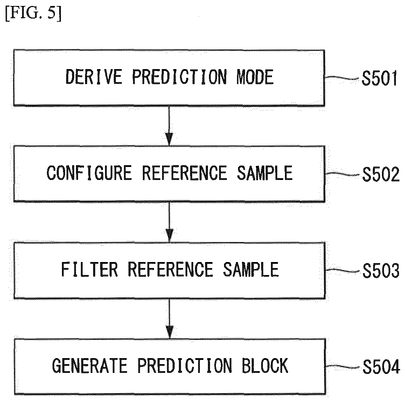

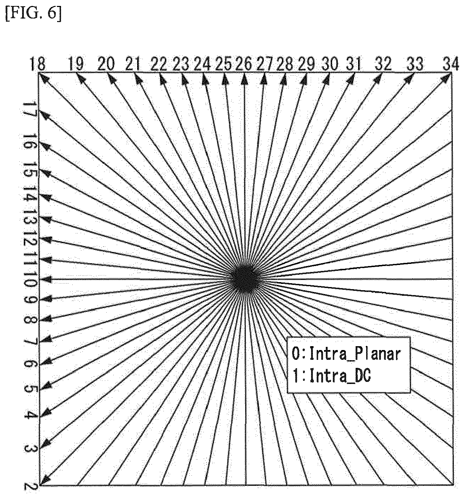

FIGS. 5 and 6 are embodiments to which the present invention is applied. FIG. 5 is a diagram for illustrating an intra-prediction method and FIG. 6 is a diagram for illustrating a prediction direction according to an intra-prediction mode.

Referring to FIG. 5, the decoder may derive the intra-prediction mode of a current processing block (S501).

In intra-prediction, a prediction direction for the location of a reference sample used for prediction may be included depending on a prediction mode. In this specification, an intra-prediction mode having a prediction direction is called an intra-direction prediction mode "Intra_Angular prediction mode" or an intra-direction mode. In contrast, an intra-prediction mode not having a prediction direction includes intra planar (INTRA_PLANAR) prediction mode and an intra DC (INTRA_DC) prediction mode.

Table 1 illustrates names associated with the intra-prediction modes, and FIG. 6 illustrates prediction directions according to the intra-prediction modes.

**[Table 1]**

| INTRA-PREDICTION MODE | ASSOCIATED NAME |
|---|---|
| 0 | INTRA_PLANAR |
| 1 | INTRA_DC |
| 2 ... 34 | Intra-direction (INTRA_ANGULAR2 ... INTRA_ANGULAR34) |

In intra-prediction, prediction for a current processing block is performed based on a derived prediction mode. The reference sample and detailed prediction method used for prediction are different depending on the prediction mode. If a current block is encoded in the intra-prediction mode, the decoder may derive the prediction mode of the current block in order to perform prediction.

The decoder may check whether neighboring samples of the current processing block can be used for prediction and configure reference samples to be used for the prediction (S502).

In intra-prediction, neighboring samples of a current processing block mean a sample that neighbors the left boundary of the current processing block of an nSxnS size, a total of 2xnS samples that neighbor the bottom left, a sample that neighbors the top boundary of the current processing block, a total of 2xnS samples that neighbor the top right, and a sample that neighbors the top left of the current processing block.

However, some of the neighboring samples of the current processing block may have not been decoded or may not be available. In this case, the decoder may configure the reference samples to be used for prediction by substituting unavailable samples with available samples.

The decoder may filter the reference sample depending on an intra-prediction mode (S503).

Whether the filtering is to be performed on the reference sample may be determined based on the size of the current processing block. Furthermore, a method of filtering the reference sample may be determined by a filtering flag transferred by an encoder.

The decoder may generate a prediction block for the current processing block based on the intra-prediction mode and the reference samples (S504). That is, the decoder may generate the prediction block (i.e., generate the prediction sample) for the current processing block based on the intra-prediction mode derived in the intra-prediction mode derivation step S501 and the reference samples obtained through the reference sample configuration step S502 and the reference sample filtering step S503.

If the current processing block is encoded in the INTRA_DC mode, in order to minimize the discontinuity of the boundary between processing blocks, at step S504, the left boundary sample (i.e., a sample neighboring a left boundary within the prediction block) and top boundary sample (i.e., a sample neighboring a top boundary within the prediction block) of the prediction block may be filtered.

Furthermore, at step S504, filtering may be applied to the left boundary sample or the top boundary sample as in the INTRA_DC mode with respect to the vertical mode and horizontal mode of the intra-direction prediction modes.

More specifically, if the current processing block has been encoded in the vertical mode or horizontal mode, the value of a prediction sample may be derived based on a reference sample located in a prediction direction. In this case, a boundary sample that belongs to the left boundary sample or top boundary sample of the prediction block and that is not located in the prediction direction may neighbor a reference sample not used for prediction. That is, the distance from the reference sample not used for the prediction may be much shorter than the distance from a reference sample used for the prediction.

Accordingly, the decoder may adaptively apply filtering to left boundary samples or top boundary samples depending on whether an intra-prediction direction is the vertical direction or horizontal direction. That is, if the intra-prediction direction is the vertical direction, filtering may be applied to the left boundary samples. If the intra-prediction direction is the horizontal direction, filtering may be applied to the top boundary samples.

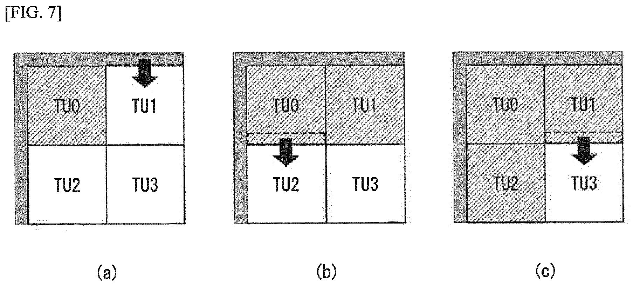

FIG. 7 is a diagram for describing a prediction procedure for a Transform Unit (TU) depth 1 in a vertical mode of an intra prediction as an embodiment to which the present invention is applied.

In the intra prediction, a prediction mode is selected in a unit of PU, and a prediction may be performed in a unit of TU with respect to the selection prediction mode. Accordingly, the prediction mode determined in a PU is applied to all of the partitioned TUs. The order of performing the prediction in a unit of TU (or scan order) may be progressed in an order of TU0 -> TU1 -> TU2 -> TU3.

Referring to FIG. 7(a) above, in a vertical mode of the intra prediction, TU0 performs a prediction by reference to a reference sample of neighboring CUs, and TU1 performs a prediction by reference to a reference sample in a part adjacent to the upper side.

Referring to FIG. 7(b) above, TU2 also performs a prediction by reference to a reference sample in a part adjacent to the upper side, and referring to FIG. 7(c) above, TU3 also performs a prediction by reference to a reference sample in a part adjacent to the upper side.

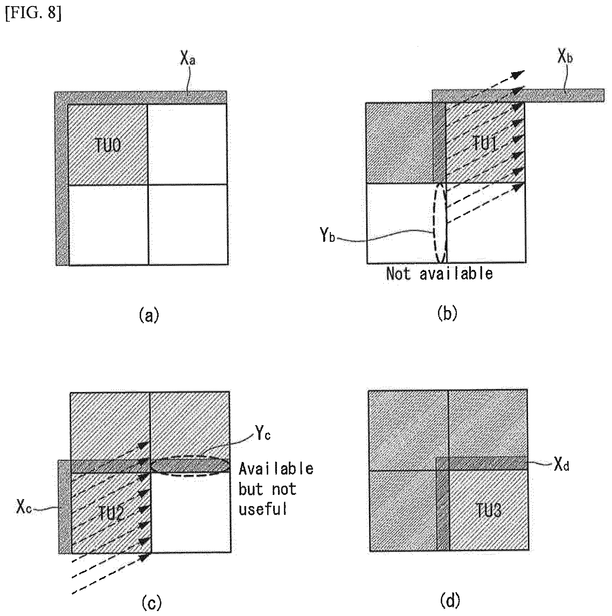

FIG. 8 is a diagram for describing a prediction procedure according to a raster scan with respect to TU depth 1 in a direction mode of the intra prediction as an embodiment to which the present invention is applied.

As described above, in the intra prediction, a prediction mode is selected in a unit of PU, and a prediction may be performed in a unit of TU with respect to the selection prediction mode. In addition, it is identified that the order of performing the prediction in a unit of TU (or scan order) follows the raster scan order. For example, in the case that a PU is partitioned into 4 TUs (or in the case that a TU depth is 1 or more), a prediction may be performed in an order; upper left block -> upper right block -> lower left block -> lower right block.

Referring to FIG. 8(a), in a direction mode of the intra prediction, TU0 may perform a prediction first according to the raster scan order. TU0 may perform a prediction using a neighboring reference sample Xa.

Referring to FIG. 8(b), TU1 may perform a prediction using a neighboring reference sample Xb, but the reference sample in Yb region is not recovered and unable to be used.

In addition, referring to FIG. 8(c), TU2 may perform a prediction using a neighboring reference sample Xc and the reference sample in Yc region is available, but is not used for an actual prediction.

Referring to FIG. 8(d), TU3 may perform a prediction using a neighboring reference sample Xd.

As such, according to the scan order, the available reference sample may be changed. In addition, the required reference sample may be changed according to the prediction mode.

Accordingly, the present invention is to propose a method for determining a scan order in which a prediction mode is considered. By determining the scan order considering the prediction mode, more reference samples available may be secured, and through it, a prediction performance may be improved.

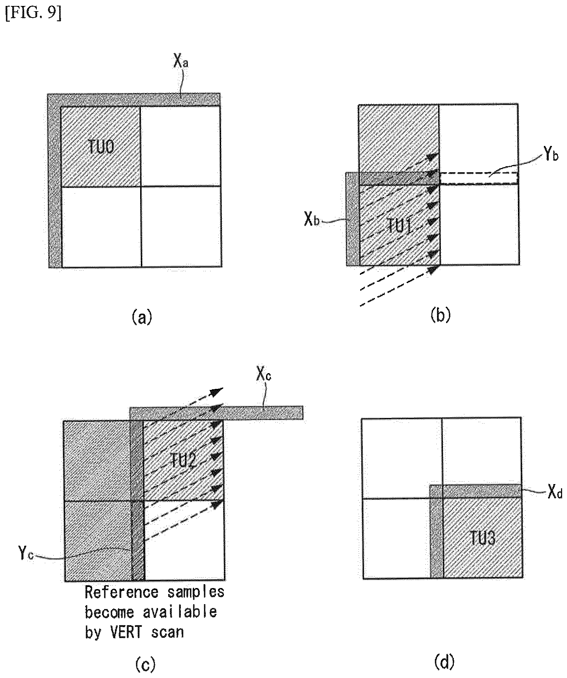

FIG. 9 is a diagram for describing a prediction procedure according to a vertical scan with respect to TU depth 1 in a direction mode of the intra prediction as an embodiment to which the present invention is applied.

The present invention is to propose a method for determining a scan order by considering a prediction mode. The scan order may be determined as represented in Table 2 below. That is, in the case that the intra prediction mode is in a direction mode less than 10, a vertical scan order may be applied, and in the case that the intra prediction mode is in a direction mode more than 26, a horizontal scan order may be applied.

**[Table 2]**

| Intra prediction mode | Scan order |
|---|---|
| Intra_pred_mode < 10 | Vertical scan |
| Intra_pred_mode > 26 | Horizontal scan |

FIG. 9 shows a case of performing a prediction according to the vertical scan order when TU depth = PU depth + 1. In the case of the vertical scan, a prediction may be performed in the order of upper left block TU0 -> lower left block TU1 -> upper right block TU2 -> lower right block TU3.

Referring to FIG. 9(a), TU0 may perform a prediction using a neighboring reference sample Xa. Referring to FIG. 9(b), TU1 may perform a prediction using a neighboring reference sample Xb. In the case of the raster scan, the reference sample in Yc region is available, but is not used for an actual prediction. However, in the case of the vertical scan, the reference sample in Yc region is available and also not even required to use it.

In addition, referring to FIG. 9(c), TU2 may perform a prediction using a neighboring reference sample Xc and the reference sample in Yc region is available by performing the vertical scan.

Referring to FIG. 9(d), TU3 may perform a prediction using a neighboring reference sample Xd.

As such, in the case that the intra prediction mode is a direction mode less than 10, the vertical scan order may be applied. In the case that the vertical scan order is applied as shown in FIG. 9(c), the available reference sample Yc may be additionally secured, and accordingly, the prediction performance may be improved.

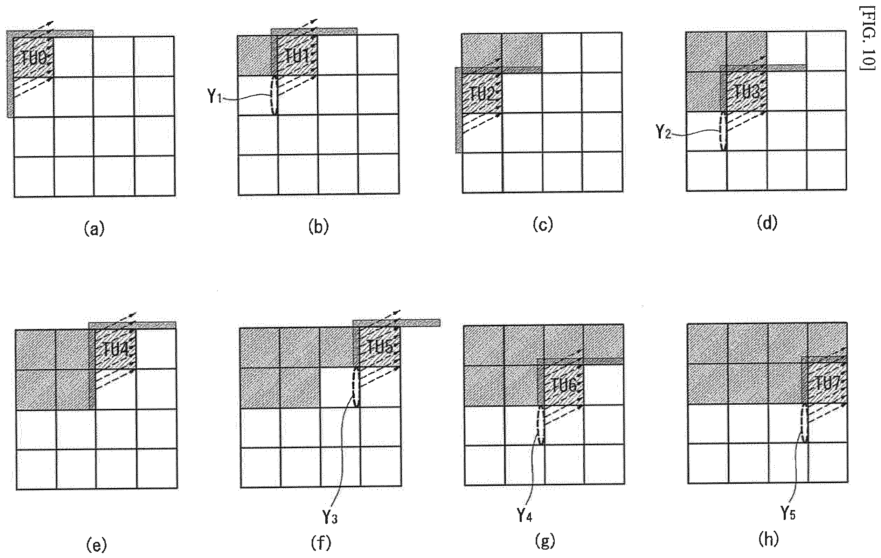

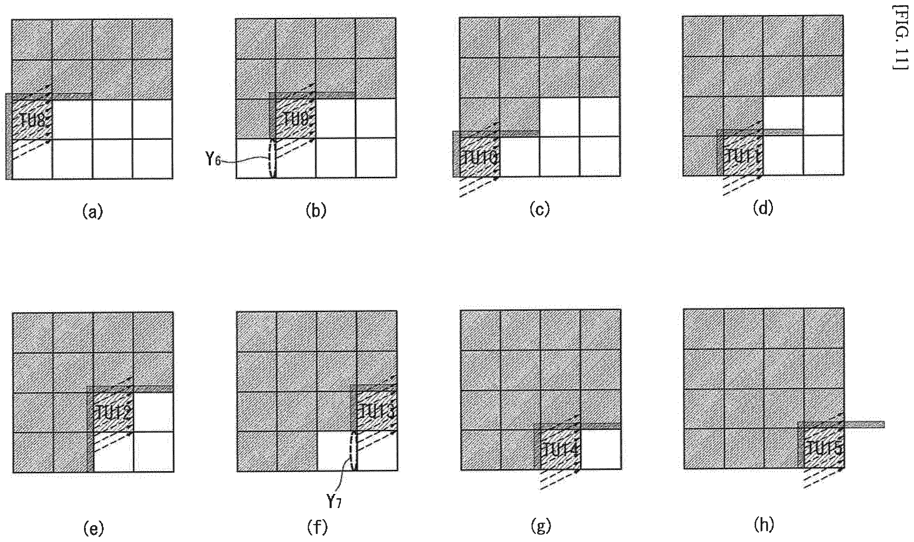

FIGS. 10 and 11 illustrate a prediction procedure according to the raster scan for describing necessity of the vertical scan with respect to TU depth 2 in a direction mode of the intra prediction, as embodiments to which the present invention is applied.

Referring to FIG. 10 and FIG. 11, a prediction procedure according to the raster scan is shown in the case that TU depth = PU depth + 2, and a prediction may be performed in the scan order of TU0 -> TU1 -> TU2 -> ... -> TU15.

The description of FIG. 8 described above may be applied to the description for the prediction procedure shown in FIG. 10(a) to FIG. 10(h) and FIG. 11 (a) to FIG. 11(h). Hereinafter, the required parts will be described only for describing the vertical scan with respect to TU depth 2 in a direction mode of the intra prediction according to an embodiment of the present invention.

Referring to FIG. 10(b), TU1 may perform a prediction using a restored reference sample, but there is a problem that the reference sample in Y₁ region is unavailable in the case that the raster scan order is applied.

Likewise, even in the case of FIG. 10(d), FIG. 10(f), FIG. 10(g), FIG. 10(h), FIG. 11(b) and FIG. 11(f), there is a problem that each of the reference samples of Y₂, Y₃, Y₄, Y₅, Y₆ and Y₇ regions is unavailable.

Accordingly, the present invention is to propose a method of applying different scan order according to the intra prediction mode. For example, in the case that the intra prediction mode is in a direction mode less than 10, the vertical scan order may be applied. In the case that the vertical scan order is applied, a prediction may be performed in the scan order of TU0 -> TU2 -> TU8 -> TU10 -> TU1 -> TU3 -> TU9 -> TU11 -> TU4 -> TU6 -> TU12 -> TU14 -> TU5 -> TU7 -> TU13 -> TU15 for TUs in FIG. 10 and FIG. 11.

As such, in the case that the vertical scan order is applied in the direction mode in which intra prediction mode is less than 10, the available reference samples Y₂, Y₃, Y₄, Y₅, Y₆ and Y₇ are additionally secured, and accordingly, the prediction performance may be more improved.

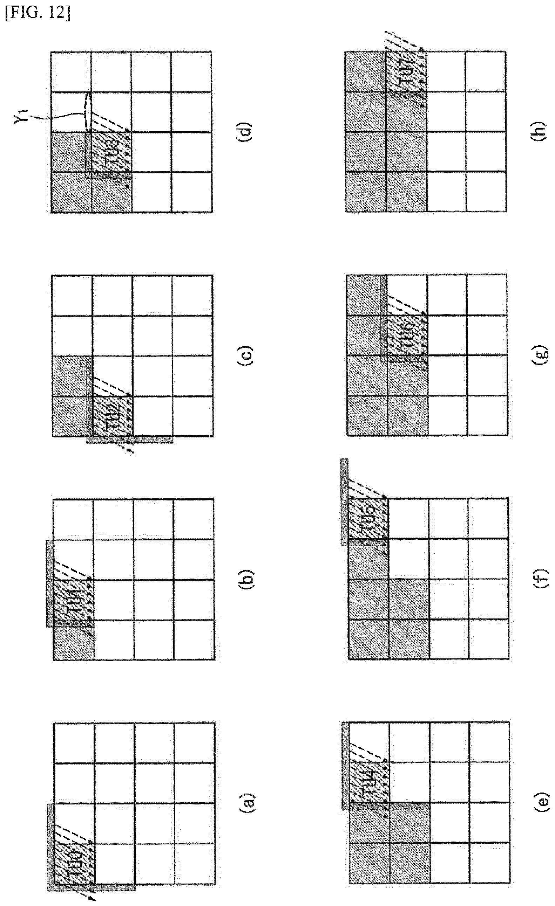

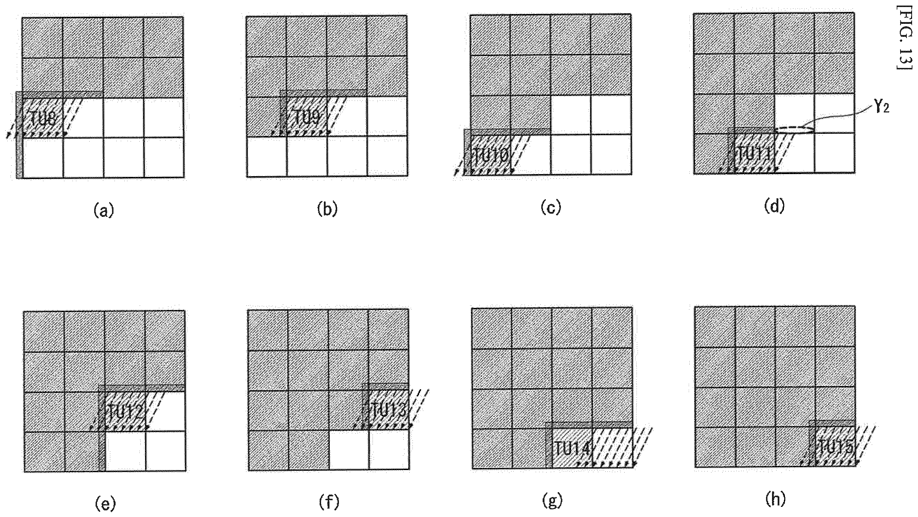

FIGS. 12 and 13 illustrate a prediction procedure according to the raster scan for describing necessity of the horizontal scan with respect to TU depth 2 in a direction mode of the intra prediction, as embodiments to which the present invention is applied.

Referring to FIG. 12 and FIG. 13, a prediction procedure according to the raster scan is shown in the case that TU depth = PU depth + 2, and a prediction may be performed in the scan order of TU0 -> TU1 -> TU2 -> ... -> TU15.

The description of FIG. 8, FIG. 11 and FIG. 12 described above may be applied to the description for the prediction procedure shown in FIG. 12(a) to FIG. 12(h) and FIG. 13(a) to FIG. 13(h). Hereinafter, the required parts will be described only for describing the horizontal scan with respect to TU depth 2 in a direction mode of the intra prediction according to an embodiment of the present invention.

Referring to FIG. 12(d), TU3 may perform a prediction using a restored reference sample, but there is a problem that the reference sample in Y₁ region is unavailable to predict TU3 in the case that the raster scan order is applied.

Likewise, there is a problem that the reference sample in Y₂ region is unavailable to predict TU11 even in the case of FIG. 13(d).

Accordingly, the present invention is to propose a method of applying different scan order according to the intra prediction mode. For example, in the case that the intra prediction mode is in a direction mode more than 26, the horizontal scan order may be applied. In the case that the horizontal scan order is applied, a prediction may be performed in the scan order of TU0 -> TU1 -> TU4 -> TU5 -> TU2 -> TU3 -> TU6 -> TU7 -> TU8 -> TU9 -> TU12 -> TU13 -> TU10 -> TU11 -> TU14 -> TU15 for TUs in FIG. 12 and FIG. 13.

As such, in the case that the vertical scan order is applied in the direction mode in which intra prediction mode is more than 26, the available reference samples Y₁ and Y₂ are additionally secured, and accordingly, the prediction performance may be more improved.

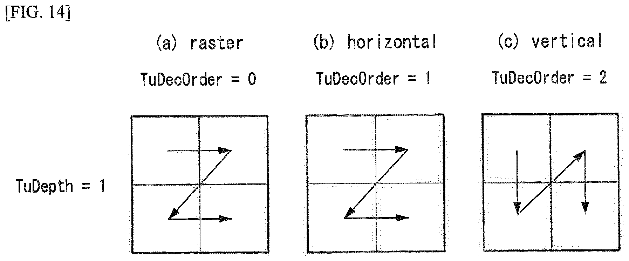

FIGS. 14 to 17 are diagrams for describing a TU decoding order according to a TU decoding order variable, as embodiments to which the present invention is applied.

The present invention proposes a method for determining a scan order considering a prediction mode. As an embodiment, a TU decoding order variable may be defined according to an intra prediction mode, and different scan order may be applied according to the TU decoding order variable.

As an embodiment, in the case that a current PU is intra-coded and a TU depth is greater than 0, the TU decoding order in a PU may follow the order defined by the TU decoding order variable. For example, the TU decoding order variable may be represented by TuDecOrder.

FIG. 14 to FIG. 16 above show the case that different scan orders are applied according to at least one of the TU decoding order variable or the TU depth. As a particular example, referring to FIG. 14(a), FIG. 15(a) and FIG. 16(a), it is identified that the raster scan is applied when TuDecOrder = 0. Furthermore, referring to FIG. 14(b), FIG. 15(b) and FIG. 16(b), it is identified that the horizontal scan is applied when TuDecOrder = 1, and referring to FIG. 14(c), FIG. 15(c) and FIG. 16(c), it is identified that the vertical scan is applied when TuDecOrder = 2.

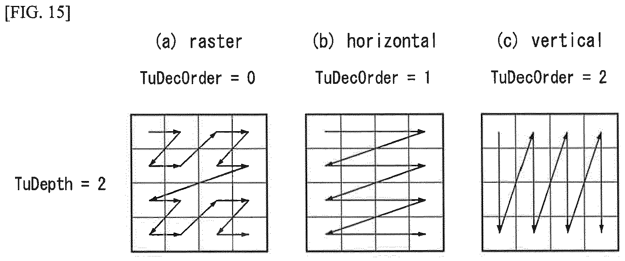

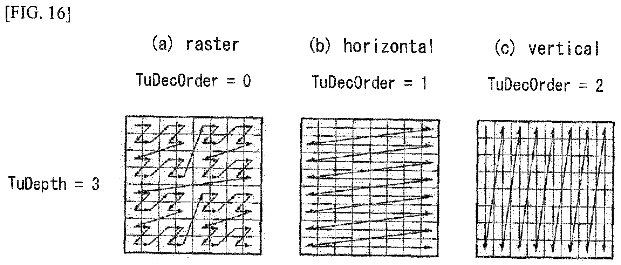

In addition, FIG. 14 shows the case that a TU depth is 1, and FIG. 15 shows the case that a TU depth is 2. And FIG. 16 shows the case that a TU depth is 3.

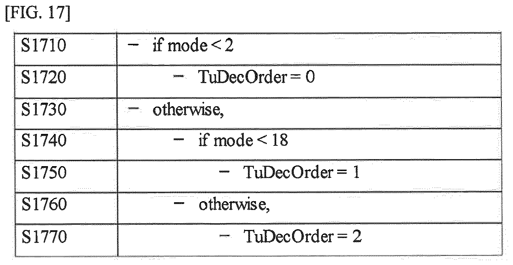

Meanwhile, the TU decoding order variable may be determined based on the intra prediction mode. For example, referring to FIG. 17, in the case that the intra prediction mode is less than 2 (step, S1710), TuDecOrder = 0, that is, the raster scan may be applied (step, S1720).

In the case that the intra prediction mode is 2 or more (step, S1730), and one of 2 to 17 (step, S1740), TuDecOrder = 1, that is, the horizontal scan may be applied (step, S1750).

And, in the case that the intra prediction mode is 18 or more (step, S1730), the vertical scan may be applied (step, S1770).

As another embodiment to which the present invention is applied, an encoder may transmit scan order information for each PU. In addition, a decoder may receive the scan order information, and perform the intra prediction accordingly.

For example, when the scan order information is a scan mode, the scan order information may be defined as represented in Table 3 below. However, the present invention is not limited thereto, and it is also available to use a combination of a plurality of scan orders below.

**[Table 3]**

| Scan_mode | Scan order |
|---|---|
| 0 | raster scan |
| 1 | Vertical scan |
| 2 | Horizontal scan |
| 3 | zigzag scan |

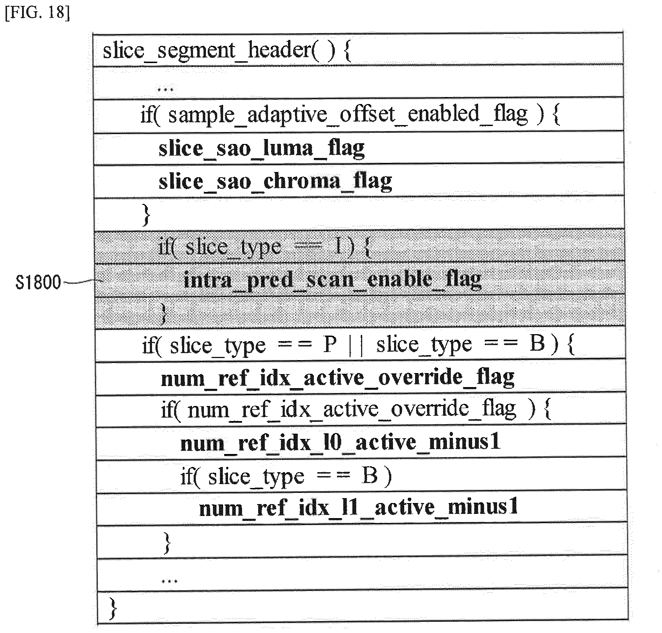

FIG. 18 is syntax for signaling a scan order flag for the intra prediction, as an embodiment to which the present invention is applied.

As an embodiment of the present invention, a flag may be defined for representing a scan order for the intra prediction. The flag may be represented as intra_pred_scan_enable_flag.

Referring to FIG. 18, in the case that the intra prediction is performed, the flag representing a scan order for the intra prediction may be received (step, S1800). When intra_pred_scan_enable_flag = 1, the scan mode representing a scan order may be transmitted for each PU. For the scan mode, the embodiment of Table 3 above may be applied, but the present invention is not limited thereto. When intra_pred_scan_enable_flag = 0, the scan mode representing a scan order is not transmitted.

Meanwhile, the flag may be defined in a slice level, but the present invention is not limited thereto, and may also be defined in Sequence Parameter Set (SPS), Picture Parameter Set (PPS), and so on.

As another embodiment, the intra_pred_scan_enable_flag may represent whether the decoding order (or scan order) is differently applied according to the intra prediction mode. When the intra_pred_scan_enable_flag = 1, it is represented that the decoding order (or scan order) is differently applied according to the intra prediction mode, and when the intra_pred_scan_enable_flag = 0, it is represented that the decoding order (or scan order) is not differently applied.

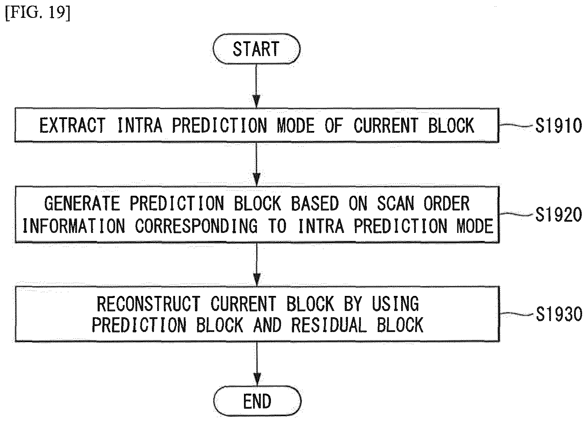

FIG. 19 is a flowchart for describing a procedure of performing a prediction using the scan order corresponding to the intra prediction mode, as an embodiment to which the present invention is applied.

First, a decoder may extract an intra prediction mode of the current block from a received bitstream (step, S1910).

The decoder may generate a prediction block based on scan order information corresponding to the extracted intra prediction mode (step, S1920). In this case, it is characterized that the scan order information is determined based on a direction of the intra prediction mode.

In addition, the scan order information may be a variable derived according to the intra prediction mode. For example, the case that the intra prediction mode is less than 2 corresponds to the raster scan, the case that the intra prediction mode is 2 or more and less than 18 corresponds to the horizontal scan, and the case that the intra prediction mode is 18 or more corresponds to the vertical scan.

As another example, the scan order information may be information transmitted from an encoder. In this case, the scan order information may be obtained for each prediction unit.

In addition, the scan order information may include at least one of the raster scan, the vertical scan, the horizontal scan or the zigzag scan.

The decoder may reconstruct the current block by using the generated prediction block and a residual block (step, S1930).

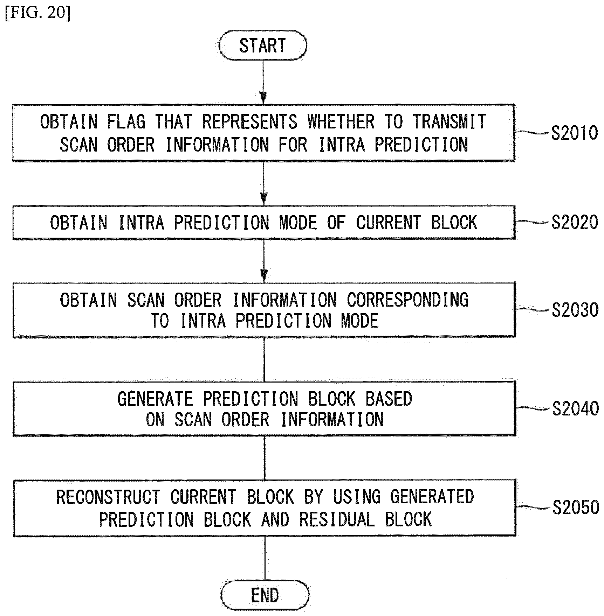

FIG. 20 is a flowchart for a procedure of performing the intra prediction based on a flag representing whether to transmit scan order information for the intra prediction, as an embodiment to which the present invention is applied.

First, a decoder may obtain a flag that represents whether to transmit scan order information for the intra prediction (step, S2010). In this case, when the flag represents a transmission of the scan order information for the intra prediction, the scan order information may be obtained.

For example, in the case that the flag is intra_pred_scan_enable_flag, when the intra_pred_scan_enable_flag = 1, a scan mode representing a scan order may be transmitted in each PU. The embodiment of Table 3 above may be applied to the scan mode, but the present invention is not limited thereto. When the intra_pred_scan_enable_flag = 0, a scan mode representing a scan order is not transmitted. In addition, the flag may be defined in a slice level, but the present invention is not limited thereto, and may also be defined in Sequence Parameter Set (SPS), Picture Parameter Set (PPS), and so on.

Meanwhile, the decoder may extract an intra prediction mode of a current block from a bitstream (step, S2020).

In addition, the decoder may obtain the scan order information corresponding to the intra prediction mode (step, S2030), and may generate a prediction block based on the obtained scan order information (step, S2040). In this case, it is characterized that the scan order information is determined based on the direction of the intra prediction mode, and all embodiments described in the present invention may be applied thereto.

The decoder may reconstruct the current block using the generated prediction block and a residual block (step, S2050).

As described above, the embodiments described in the present invention may be performed by being implemented on a processor, a microprocessor, a controller or a chip. For example, the functional units shown in FIG. 1 and FIG. 2 may be performed by being implemented on a computer, a processor, a microprocessor, a controller or a chip.

As described above, the decoder and the encoder to which the present invention is applied may be included in a multimedia broadcasting transmission/reception apparatus, a mobile communication terminal, a home cinema video apparatus, a digital cinema video apparatus, a surveillance camera, a video chatting apparatus, a real-time communication apparatus, such as video communication, a mobile streaming apparatus, a storage medium, a camcorder, a VoD service providing apparatus, an Internet streaming service providing apparatus, a three-dimensional 3D video apparatus, a teleconference video apparatus, and a medical video apparatus and may be used to code video signals and data signals.

Furthermore, the decoding/encoding method to which the present invention is applied may be produced in the form of a program that is to be executed by a computer and may be stored in a computer-readable recording medium. Multimedia data having a data structure according to the present invention may also be stored in computer-readable recording media. The computer-readable recording media include all types of storage devices in which data readable by a computer system is stored. The computer-readable recording media may include a BD, a USB, ROM, RAM, CD-ROM, a magnetic tape, a floppy disk, and an optical data storage device, for example. Furthermore, the computer-readable recording media includes media implemented in the form of carrier waves, e.g., transmission through the Internet. Furthermore, a bit stream generated by the encoding method may be stored in a computer-readable recording medium or may be transmitted over wired/wireless communication networks.

### [Industrial Applicability]

The exemplary embodiments of the present invention have been disclosed for illustrative purposes, and those skilled in the art may improve, change, replace, or add various other embodiments within the technical spirit and scope of the present invention disclosed in the attached claims.

## Claims

1. A method for decoding a video signal, comprising:
extracting an intra prediction mode of a current block from the video signal;
generating a prediction block based on scan order information corresponding to the intra prediction mode; and
reconstructing the current block by using the generated prediction block and a residual block,
wherein the scan order information is determined based on a direction of the intra prediction mode.

2. The method of claim 1,
wherein the scan order information is a variable derived according to the intra prediction mode.

3. The method of claim 1,
wherein the scan order information includes at least one of a raster scan, a vertical scan, a horizontal scan or a zigzag scan.

4. The method of claim 1, further comprising
obtaining the scan order information from the video signal,
wherein the scan order information is obtained for each prediction unit.

5. The method of claim 4, further comprising
obtaining a flag representing whether to transmit the scan order information for an intra prediction,
wherein the scan order information is obtained when the flag indicates a transmission of the scan order information for the intra prediction.

6. The method of claim 5,
wherein the flag is defined in at least one level of a Sequence Parameter Set (SPS), a Picture Parameter Set (PPS), or a slice header.

7. The method of claim 1,
wherein the scan order information corresponds to a raster scan when the intra prediction mode is less than 2,
wherein the scan order information corresponds to a horizontal scan when the intra prediction mode is 2 or more and less than 18, and
wherein the scan order information corresponds to a vertical scan when the intra prediction mode is 18 or more corresponds to the vertical scan.

8. An apparatus for decoding a video signal, comprising:
a bitstream extracting unit configured to extract an intra prediction mode of a current block from the video signal;
an intra prediction unit configured to generate a prediction block based on scan order information corresponding to the intra prediction mode; and
a reconstruction unit configured to reconstruct the current block by using the generated prediction block and a residual block,
wherein the scan order information is determined based on a direction of the intra prediction mode.

9. The apparatus of claim 8,
wherein the scan order information is a variable derived according to the intra prediction mode.

10. The apparatus of claim 8,
wherein the scan order information includes at least one of a raster scan, a vertical scan, a horizontal scan or a zigzag scan.

11. The apparatus of claim 8,
wherein the bitstream extracting unit extracts the scan order information from the video signal, and
wherein the scan order information is obtained for each prediction unit.

12. The apparatus of claim 11,
wherein the bitstream extracting unit extracts a flag representing whether to transmit the scan order information for an intra prediction, and
wherein the scan order information is obtained when the flag indicates a transmission of the scan order information for the intra prediction.

13. The apparatus of claim 12, wherein the flag is defined in at least one level of a Sequence Parameter Set (SPS), a Picture Parameter Set (PPS), or a slice header.

14. The apparatus of claim 8,
wherein the scan order information corresponds to a raster scan when the intra prediction mode is less than 2,
wherein the scan order information corresponds to a horizontal scan when the intra prediction mode is 2 or more and less than 18, and
wherein the scan order information corresponds to a vertical scan when the intra prediction mode is 18 or more corresponds to the vertical scan.
